# EUROPEAN PATENT SPECIFICATION

(11) **EP 0 743 223 B1**
(45) Date of publication and mention of the grant of the patent: **15.09.1999**
(21) Application number: 95830447.9
(22) Date of filing: 23.10.1995
(51) Int. Cl.: B60N 2/48

(54) **Headrest structure for motor vehicle seats**
Struktur für Fahrzeugsitzkopfstütze
Structure d'appui tête pour véhicules automobiles

(30) Priority: 18.04.1995 IT TO950097 U
(43) Date of publication of application: 20.11.1996
(73) Proprietor: GESTIND-M.B." MANIFATTURA DI BRUZOLO" S.P.A, I-10050 Bruzolo (Torino) (IT)
(72) Inventor: De Filippo, Emilio, I-10050 Bruzolo (Torino) (IT)
(74) Representative: Boggio, Luigi

(56) References cited:
- EP-A- 0 603 136
- DE-U- 8 909 637
- DE-U- 9 400 352
- FR-A- 2 470 021
- FR-A- 2 632 588
- GB-A- 2 064 312
- GB-A- 2 082 053

## Description

The present invention relates to headrest structures for motor-vehicle seats, of the type disclosed in EP-A-0 603 136, comprising a framework of moulded plastics material and a pair of support rods fitted at their upper ends within respective spaced-apart hollow parts of said framework, the lower ends of said support rods being adapted to support the headrest on top of a seat backrest.

Traditionally, in the known headrest structures of the above-referenced type the two support rods are fixed and restrained relative to the respective hollow parts of the framework by means of locking metal members incorporated within the framework itself.

This solution involves constructive complications due to the difficulty of incorporating these locking members within the framework, as well as problems of assembling the support rods and the framework related to obtaining a precise centering and relative alignment therebetween.

The object of the present invention is to overcome the above drawbacks, and to provide a headrest structure for motor-vehicle seats of the type set forth at the beginning, which enables to obtain advantages both in connection with manufacturing simplicity, and with reference to easy assembling between the related components.

A further object of the invention is to provide a headrest structure of the above-referenced type which ensures, in the assembled condition between the support rods and the framework, a remarkable rigidity and structural strength.

According to the invention, these objects are achieved by virtue of the fact that a headrest structure for motor-vehicle seats such as defined at the beginning is characterized in that:
- each of said hollow parts of the framework is formed inferiorly, in correspondence of the base of said framework, with an annular bearing seat, and superiorly with an integral resilient tooth projecting into said hollow part,
- the upper end of each support rod is formed inferiorly with an annular integral stop collar and superiorly with a lateral engagement recess,
   the arrangement being such that upon axial insertion of the upper end of the support rod within the corresponding hollow part of the framework, said resilient tooth irreversibly snap fits into said engagement recess when said annular collar abuts against said annular bearing seat.

According to a preferred embodiment of the invention, the upper ends of the support rod are further provided with respective axial key projections which are slidably engageable, upon introduction into the framework, along corresponding guide grooves of the respective hollow parts of the framework, said key projections and engagement recesses on one hand, and said resilient teeth and guide grooves on the other hand, having specularly opposed arrangements, such that each of the two support rods can be introduced and snap fitted only into one corresponding hollow part of the framework.

Further features and advantages of the invention will become apparent from the detailed description which follows, with reference to the accompanying drawings purely provided by way of non-limiting example, in which:

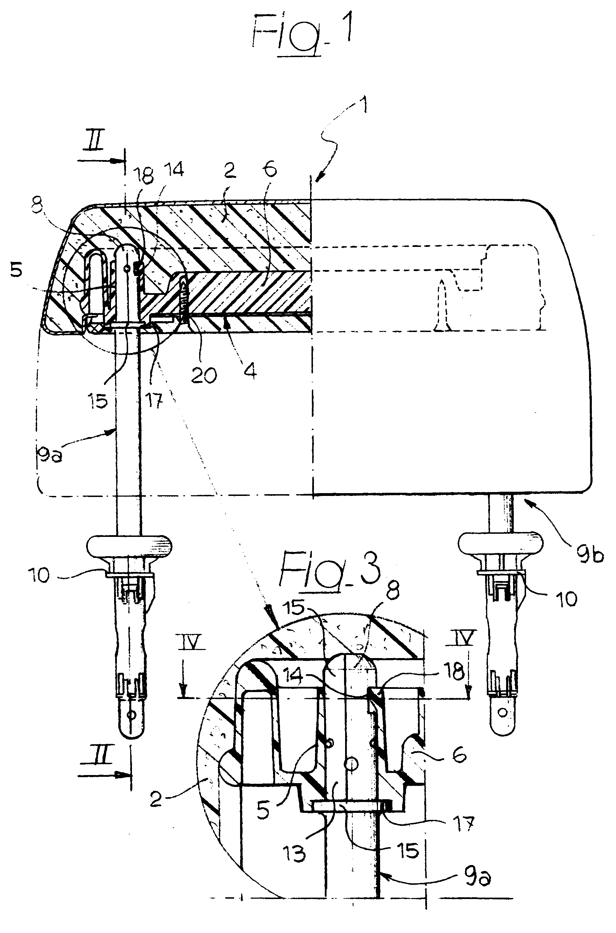

figure 1 is a front elevational and partially sectioned view of a headrest for motor-vehicle seats incorporating a structure according to the invention,
figure 2 is a vertically sectioned and enlarged view along line II-II of figure 1,
figure 3 shows in an enlarged scale the detail enclosed in a circle in figure 1,
figure 4 is a horizontally sectioned view along line IV-IV of figure 3, and
figure 5 is a perspective and partial view showing the upper ends of the support rods of the headrest structure according to the invention.

Referring to the drawings, reference numeral 1 generally indicates a headrest for motor-vehicle seats, essentially comprising a resilient body or pillow 2, normally made of foamed plastics material and having an outer covering 3, and a load-bearing framework 4 incorporated within the resilient body 2.

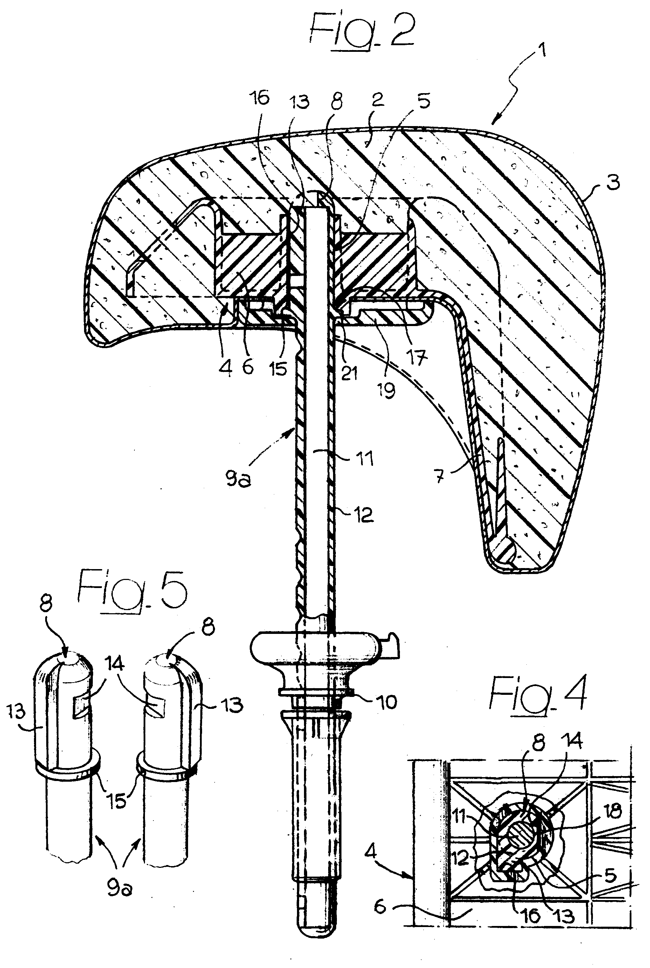

The framework 4 is formed in one piece of moulded plastics material with a general angled shape (figure 2), with a base portion 6 and a back portion 7 extending substantially perpendicularly to the base portion 6.

The base portion 6 is formed with two spaced-apart tubular parts 5 each of which is passed through by the upper end 8 of a respective support rod 9a, 9b. These rods 9a, 9b are rigidly connected to the tubular parts 5 of the framework 4 in the way clarified herebelow.

The two support rods 9a, 9b are intended to be connected inferiorly to the structure of the seat backrest, by means of respective sleeves 10 provided with a height adjustment system of the corresponding support rods 9a, 9b.

Each support rod 9a, 9b is formed by a cylindrical metal core 11 over which a thick covering 12 of plastics material is applied by moulding.

In correspondence of the upper end 8 of each support rod 9a, 9b, the respective plastics material covering 12 is formed frontally (i.e. towards the front face of the headrest 1) with a longitudinal key projection 13 and, laterally, with an engagement recess 14. An annular integral stop collar 15 is formed at the base of the key projection 13.

The key projections 13 and the stop collars 15 are integrally formed with the plastics material coverings 12 of the rods 9a, 9b and, as shown in figure 5, the arrangement is not symmetrical, but is specularly opposed for the two rods 9a, 9b.

Correspondingly, the two tubular parts 5 of the framework 4 have a specularly opposed configuration, with a cross section having a profile complementary to that disclosed in the above of the upper ends 8 of the support rods 9a, 9b. In detail, and with particular reference to figures 3 and 4, the cavity of each tubular part 5 has a cylindrical shape with a prismatic portion defining a centering and guiding groove 16 for the axial key projection 13 of the upper end 8 of the corresponding support rod 9a, 9b.

Inferiorly, each tubular part 5 is formed with an annular bearing seat 17 whose shape is complementary to that of the annular stop collar 15, while superiorly a resilient tooth 18 is integrally formed, which is radially projecting inwardly and adapted to cooperate, such as explained in the following, with the engagement recess 14 of the upper end 9 of the corresponding support rod 9a, 9b.

Reference numeral 19 indicates a cover, also made of moulded plastics material, secured under the base 6 of the framework 4 by means of screws 20, and formed with a pair of apertures 21 passed through by the support rods 9a, 9b.

Assembling of the support rods 9a, 9b relative to the framework 4 is performed as follows.

As previously clarified, each support rod 9a, 9b can be coupled and fitted only within one respective tubular part 5.

Coupling between the upper end 8 of the support rod 9a or 9b and the related tubular part 5 is carried out with a certain degree of axial forcing so that, following properly alignment of the key projection 13 relative to the groove 16, the rod 9a or 9b is axially pushed along the tubular part 5, until the stop collar 15 abuts against the lower annular seat 17. At the same time the resilient tooth 19 snap fits, in an irreversible way, into the engagement recess 14.

Same operations are evidently performed in connection with the other support rod 9b or 9a, respectively.

In the fitted condition, coupling between the upper end 8 of the support rods 9a, 9b and the framework 4 is remarkably steady and rigid, and the irreversible engagement of the teeth 18 relative to the engagement recesses 14 prevents any risks of accidental disassembling.

Naturally the details of construction and the embodiments may be varied with respect to what has been described and illustrated, if not thereby departing from the scope of the present invention, such as defined in the appended claims.

## Claims

1. Headrest structure (1) for motor-vehicle seats, comprising a moulded plastics material framework (4) and a pair of support rods (9a, 9b) fitted at their upper ends (8) within respective spaced-apart hollow parts (5) of said framework (4), the lower ends (10) of said support rods (9a, 9b) being adapted to support the headrest (1) on top of a seat backrest, characterized in that:
- each of said hollow parts (5) of the framework (4) is formed inferiorly, in correspondence of the base (6) of said framework (4), with an annular bearing seat (17), and superiorly with an integral resilient tooth (18) projecting into said hollow part (5),
- the upper end (8) of each support rod (9a, 9b) is formed inferiorly with an annular integral stop collar (15) and superiorly with a lateral engagement recess (14),
the arrangement being such that upon axial insertion of the upper end (8) of the support rod (9a, 9b) within the corresponding hollow part (5) of the framework (4), said resilient tooth (18) irreversibly snap fits into said engagement recess (14) when said annular collar (15) abuts against said annular bearing seat (17).

2. Headrest structure according to claim 1, characterized in that the upper ends (8) of the support rods (9a, 9b) are further provided with respective axial key projections (13) slidably engageable, upon introduction into the framework (4), along corresponding guide grooves (16) of the respective hollow parts (5) of the framework, said key projections (13) and engagement recess (4) on one hand, and said resilient teeth (18) and guide grooves (16) on the other hand, having specularly opposed arrangements, such that each of the two support rods (9a, 9b) can be introduced and snap fitted only into one corresponding hollow part (5) of the framework (4).

3. Headrest structure according to claim 2, characterized in that each support rod (9a, 9b) comprises a metal core (11) and a thick rigid plastics material covering (12) moulded over the metal core (11) and integrally formed with said annular stop collar (15), with said lateral engagement recess (14) and with said axial key projection (13).

4. Headrest structure according to any of the preceding claims, characterized in that the framework (4) has a generally angled configuration (6, 7).

## Patentansprüche

1. Kopfstützenaufbau (1) für Sitze eines Motorfahrzeuges, umfassend einen Rahmen (4) aus gegossenem Kunststoffmaterial und ein Paar von Haltestangen (9a, 9b), die an ihren oberen Enden (8) innerhalb entsprechender beabstandeter hohler Teile (5) des Rahmens (4) eingesteckt sind, wobei die unteren Enden (10) der Haltestangen (9a, 9b) dazu geeignet sind, die Kopfstütze (1) auf der Oberseite der Rückenlehne zu halten, dadurch gekennzeichnet, daß
- jedes der hohlen Teile (5) des Rahmens (4) auf der Unterseite in Übereinstimmung mit der Unterseite (6) des Rahmens (4) mit einem ringförmigen Lagersitz (17) und auf der Oberseite mit einem einstückigen elastischen Zahn (18), der in das hohle Teil (5) vorsteht, gebildet ist,
- das obere Ende (8) jeder Haltestange (9a, 9b) auf der Unterseite mit einer ringförmigen, einstückigen Anschlaghülse (15) und auf der Oberseite mit einer seitlichen Eingriffsaussparung (14) gebildet ist,
wobei die Anordnung so ist, daß auf das axiale Einsetzen des oberen Endes (8) der Haltestange (9a, 9b) innerhalb des entsprechenden hohlen Teils (5) des Rahmens (4) hin, der elastische Zahn (18) irreversibel in die Eingriffsaussparung (14) einschnappt, wenn die ringförmige Hülse (15) gegen den ringförmigen Lagersitz (17) anstößt.

2. Kopfstützenaufbau gemäß Anspruch 1, dadurch gekennzeichnet, daß die oberen Enden (8) der Haltestangen (9a, 9b) weiterhin mit entsprechenden axialen Keilvorsprüngen (13) versehen sind, die verschiebbar auf das Einführen in den Rahmen (4) hin entlang entsprechender Führungsnuten (16) der entsprechenden hohlen Teile (5) des Rahmens in Eingriff gebracht werden können, wobei die Keilvorsprünge (13) und die Eingriffsaussparung (4) einerseits und die elastischen Zähne (18) und Führungsnuten (16) andererseits spiegelbildlich entgegengesetzte Anordnungen besitzen, so daß jede der zwei Haltestangen (9a, 9b) nur in ein entsprechendes hohles Teil (5) des Rahmens (4) eingeführt und eingeschnappt werden kann.

3. Kopfstützenaufbau gemäß Anspruch 2, dadurch gekennzeichnet, daß jede Haltestange (9a, 9b) einen Metallkern (11) und eine dicke, starre Kunststoffmaterialabdeckung (12) umfaßt, die über den Metallkern (11) gegossen ist und einstückig mit der ringförmigen Anschlaghülse (15), der seitlichen Eingriffsaussparung (14) und dem axialen Keilvorsprung (13) gebildet ist.

4. Kopfstützenaufbau gemäß einem der vorhergehenden Ansprüche, dadurch gekennzeichnet, daß der Rahmen (4) eine im allgemeinen winklige Gestalt (6, 7) besitzt.

## Revendications

1. Structure d'appui-tête (1) pour des sièges de véhicules automobiles, comprenant une ossature (4) formée d'une matière plastique moulée et une paire de tiges de support (9a,9b) montées à leurs extrémités supérieures (8) à l'intérieur de parties creuses respectives espacées (5) de ladite ossature (4), les extrémités inférieures (10) desdites tiges de support (9a,9b) étant adaptées de manière à supporter l'appui-tête (1) à la partie supérieure d'un dossier de siège, caractérisée en ce que :
- chacune desdites parties creuses (5) de l'ossature (4) comporte à sa partie inférieure, d'une manière correspondant à la base (6) de ladite ossature (4), un siège de support annulaire (17) et à sa partie supérieure, une dent élastique (18) formée d'un seul tenant et disposée en saillie à l'intérieur de ladite partie creuse (5),
- l'extrémité supérieure (8) de chaque tige de support (9a,9b) comporte, à sa partie inférieure, un collet d'arrêt annulaire d'un seul tenant (15) et, à sa partie supérieure, un renfoncement latéral d'engagement (14),
l'agencement étant tel que, lors de l'insertion axiale de l'extrémité supérieure (8) de la tige de support (9a,9b) dans la partie creuse correspondante (5) de l'ossature (4), ladite dent élastique (18) s'encliquette d'une manière irréversible dans ledit renfoncement d'engagement (14) lorsque ledit collet annulaire (15) est en butée contre ledit siège de support annulaire (17).

2. Structure d'appui-tête selon la revendication 1, caractérisée en ce que les extrémités supérieures (8) des tiges de support (9a,9b) sont en outre pourvues de parties saillantes formant clavettes axiales respectives (13) pouvant s'engager avec glissement, lors de l'introduction dans l'ossature (4), le long de rainures de guidage correspondantes (16) des parties creuses respectives (5) de l'ossature, lesdites parties saillantes formant clavettes (13) et ledit renfoncement d'engagement (15) d'une part, et lesdites dents élastiques (18) et les rainures de guidage (16) d'autre part possédant des agencements symétriquement opposés, de sorte que chacune des deux tiges de support (9a,9b) peut être introduite et montée par encliquetage uniquement dans une partie creuse correspondante (5) de l'ossature (4).

3. Structure d'appui-tête selon la revendication 2, caractérisée en ce que chaque tige de support (9a,9b) comprend un noyau métallique (11) et un revêtement rigide épais en matière plastique (12) moulé sur le noyau métallique (11) et formé d'un seul tenant avec ledit collet d'arrêt annulaire (15), ledit renfoncement latéral d'engagement (14) et ladite partie saillante axiale formant clavette (13).

4. Structure d'appui-tête selon l'une quelconque des revendications précédentes, caractérisée en ce que l'ossature (4) possède une configuration (6,7) de forme générale anguleuse.
